# EUROPÄISCHE PATENTSCHRIFT

(11) **EP 1 569 995 B1**
(45) Veröffentlichungstag und Bekanntmachung des Hinweises auf die Patenterteilung: **21.11.2007**
(21) Anmeldenummer: 03795829.5
(22) Anmeldetag: 20.11.2003
(51) Int. Cl.: C08K 5/523, C08L 69/00

(54) **POLYCARBONAT-FORMMASSEN**
POLYCARBONATE MOLDING COMPOUNDS
MATIERES MOULABLES A BASE DE POLYCARBONATE

(30) Priorität: 03.12.2002 DE 10256316
(43) Veröffentlichungstag der Anmeldung: 07.09.2005
(73) Patentinhaber: Bayer MaterialScience AG, 51368 Leverkusen (DE)
(72) Erfinder: SEIDEL, Andreas, 41542 Dormagen (DE); ECKEL, Thomas, 41540 Dormagen (DE); WARTH, Holger c/o Bayer MaterialScience Ltd., Hong Kong 77/F The Center (HK)
(86) Internationale Anmeldenummer: PCT/EP2003/012994
(87) Internationale Veröffentlichungsnummer: WO 2004/050755

(56) Entgegenhaltungen:
- EP-A- 0 410 221
- WO-A-99/36474
- WO-A-02/086839
- WO-A-03/054085
- US-A1- 2002 123 567

## Beschreibung

Die Erfindung betrifft schlagzähmodifizierte Zusammensetzungen auf Basis von verzweigtem Polycarbonat und speziellen, nicht auf Polybutadienkautschuk als Pfropfgrundlage beruhenden Pfropfpolymerisaten, die vorteilhafte Eigenschaften hinsichtlich Spannungsrissbeständigkeit unter Chemikalieneinfluss aufweisen. Insbesondere betrifft die Erfindung solche zuvor beschriebenen Zusammensetzungen, die mit halogenfreien Phosphorverbindungen flammwidrig ausgerüstet sind.

Die in WO 99/57198 beschriebenen Formmassen enthalten aromatische Polycarbonate, kautschukmodifizierte Pfropfcopolymere und Phosphor enthaltende Flammschutzmittel mit der Maßgabe, dass der Fluorgehalt der Mischung 0,1 Gew.-% nicht übersteigt. Als Polycarbonat-Komponente können in den hier beschriebenen Zusammensetzungen sowohl lineare als auch verzweigte Polymere eingesetzt werden. Besondere Vorteile, die sich bei Einsatz von verzweigten Typen insbesondere in Kombination mit Butadien-freien Pfropfpolymerisaten ergeben, werden nicht beschrieben.

In der DE-A 3 149 812 werden thermoplastische Formmassen mit verbesserter Verarbeitbarkeit beschrieben, die verzweigte Polycarbonate auf Basis von Tetracarbonsäuredianhydriden als Verzweigungsmittel sowie Pfropfpolymerisate des Typs ABS, AES und ASA enthalten. Vorteile von ASA- und AES-haltigen Zusammensetzungen gegenüber äquivalenten ABS-haltigen Formulierungen werden nicht beschrieben.

EP-A 496 258 beschreibt Zusammensetzungen, die mit speziellen triphenolischen Verbindungen verzweigtes Polycarbonat und weitere Polymerkomponenten wie beispielsweise Styrolharze, Polyamid, Polyolefine und kautschukartige Elastomere enthalten. EP-A 496 258 hat das Ziel, Polycarbonat-Zusammensetzungen mit guter Schmelzefließfähigkeit, Lösungsmittelbeständigkeit und Zähigkeit bereitzustellen.

US-A 5 087 663 und US-A 5 068 285 beschreiben verzweigte Polycarbonate bzw. deren Mischung mit linearen Polycarbonaten in Mischung mit ABS bzw. ASA-Polymeren und MBS-Polymeren, die ein gutes Blasform- oder Thermoformverhalten aufweisen.

In JP-A 50 109 247 und JP-A 58 098 354 werden Polycarbonatblends mit AES beschrieben, die als weitere Komponente flüssiges Paraffinöl bzw. weichmachende Additive enthalten.. Spezielle Vorteile, die sich aus Verwendung von verzweigtem Polycarbonat ergeben, werden in dieser Anmeldung nicht beschrieben.

Aufgabe der vorliegenden Erfindung war es, Zusammensetzungen mit verbesserter Spannungsrissbeständigkeit unter Chemikalieneinfluss bereitzustellen. Insbesondere betrifft die Erfindung auch flammwidrige Zusammensetzungen mit halogenfreier Flammschutzadditivierung.

Überraschend wurde gefunden, dass Formmassen aus speziellem verzweigtem Polycarbonat und Emulsionspfropfpolymerisaten, die nicht auf Polybutadienkautschuk als Pfropfgrundlage beruhen, eine gegenüber vergleichbaren Formmassen mit linearem Polycarbonat verbesserte Spannungsrissbeständigkeit unter Chemikalieneinwirkung aufweisen. Dieses war insbesondere deshalb überraschend, da bei Zusammensetzungen aus verzweigtem Polycarbonat und Emulsionspfropfpolymerisaten auf Basis von Polybutadienkautschuken (ABS) eine geringere Spannungsrissbeständigkeit unter Chemikalieneinwirkung gefunden wird als bei vergleichbaren Zusammensetzungen mit linearem Polycarbonat.

Die erfindungsgemäßen Zusammensetzungen sind witterungsstabil und eignen sich hervorragend insbesondere zur Verarbeitung im Extrusions-, Tiefzieh- und Blasformverfahren.

Die Erfindung betrifft Zusammensetzungen bestehend aus
A) 40 bis 99,5 Gew.-Teile, vorzugsweise 50 bis 99 Gew.-Teile, insbesondere 55 bis 98 Gew.-Teile verzweigtes aromatisches Polycarbonat oder Polyestercarbonat basierend auf trifunktionellen oder tetrafunktionellen phenolischen Verzweigern, die als aktive funktionelle Gruppen auch Amin-Funktionalitäten enthalten wobei die Verzweigung in diesem Fall durch Amidbindungen zustande kommt, und welches in Bezug auf die Diol-Komponente aus Bisphenol-A besteht, und
B) 0,5 bis 60 Gew.-Teile, vorzugsweise 1 bis 50 Gew.-Teile, insbesondere 2 bis 45 Gew.-Teile Pfropfpolymerisat, bevorzugt teilchenförmiges Emulsionspfropfpolymerisat, mit einer von Polybutadienkautschuk verschiedenen Pfropfgrundlage.

Bevorzugte Formmassen sind solche mit halogenfreier Flammschutzausrüstung, insbesondere auf Basis von Phosphor-basierenden Verbindungen, bevorzugt auf Basis von organischen Phosphorsäureestern, insbesondere von oligomeren Phosphorsäureestern, wobei die Phosphorverbindungen bevorzugt in Kombination mit fluorierten Polyolefinen zum Einsatz kommen.

### Komponente A

Erfindungsgemäß geeignete verzweigte aromatische Polycarbonate und/oder verzweigte aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate.

Die Herstellung aromatischer Poly(ester)carbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und unter Verwendung von trifunktionellen oder tetrafunktionellen phenolischen Verzweigern, die als aktive funktionelle Gruppen auch Amin-Funktionalitäten enthalten können, wobei die Verzweigung in diesem Fall durch Amidbindungen zustande kommt. Als Verzweiger geeignet sind beispielsweise Triphenole oder Tetraphenole und in bevorzugter Weise auch solche phenolischen Verzweiger mit mindestens drei für eine Kondensationsreaktion geeignete funktionelle Gruppen mit abgestufter Reaktivität.

Besonders bevorzugt kommt Isatinbiscresol als Verzweiger zum Einsatz.

Die Verzweiger werden in einer Menge von 0,01 bis 5 mol-%, bevorzugt von 0,02 bis 2 mol-%, insbesondere von 0,05 bis 1 mol-%, besonders bevorzugt von 0,1 bis 0,5 mol-%, bezogen auf die Summe aus Diphenol und Verzweiger im Poly(ester)carbonat eingesetzt.

Erfindungsgemäß geeignete verzweigte Polycarbonate lassen sich auch nach dem bekannten Schmelzepolymerisationsverfahren durch Umsetzung von diphenolischen Verbindungen mit Diphenylcarbonat unter Verwendung o.g. Verzweiger und Kettenabbrecher herstellen.

Das Diphenol zur Herstellung der verzweigten aromatischen Polycarbonate und/oder aromatischen Polyestercarbonate.

Das Diphenol ist literaturbekannt oder nach literaturbekannten Verfahren erhältlich.

Für die Herstellung der thermoplastischen, aromatischen verzweigten Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-A 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol-%, und 10 mol-%, bezogen auf die Molsumme des eingesetzten Diphenols

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 mol-%, bezogen im Falle der phenolischen Kettenabbrecher auf Mole Diphenole und im Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol-%, besonders bevorzugt bis zu 50 mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen verzweigten Polycarbonate und Polyester-carbonate können allein oder im beliebigen Gemisch eingesetzt werden.

Die relativen Lösungsviskositäten der erfindungsgemäß geeigneten Poly(ester)carbonate liegen im Bereich von 1,20 bis 1,50, bevorzugt von 1,24 bis 1,40, insbesondere von 1,25 bis 1,35, gemessen in CH₂Cl₂ als Lösungsmittel bei 25°C und in einer Konzentration von 0,5 g/100 ml.

### Komponente B

Für die Pfropfpolymerisate gemäß Komponente B geeignete Pfropfgrundlagen sind beispielsweise EP(D)M-Kautschuke, also solche auf Basis Ethylen/Propylen, weiterhin Acrylat-, Polyurethan-, Silikon-, Ethylen/Vinylacetat-Kautschuke sowie Silikon-Acrylat-Kompositkautschuke.

Bevorzugt sind EPDM-Kautschuke, Silikonkautschuke, Acrylatkautschuke und Silikon-Acrylat-Kompositkautschuke.

Besonders bevorzugt sind Silikon-Acrylat-Kompositkautschuke.

Die Pfropfgrundlagen haben im Allgemeinen eine mittlere Teilchengröße (d₅₀-Wert) von 0,05 bis 5 µm, vorzugsweise 0,1 bis 2 µm, insbesondere 0,1 bis 1 µm.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Der Gelanteil dieser Pfropfgrundlagen beträgt bevorzugt mindestens 30 Gew.-%, insbesondere mindestens 40 Gew.-% (in Toluol gemessen).

Der Gelgehalt wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Als Pfropfgrundlage geeignete Siliconacrylatkompositkautschuke enthalten 0 bis 100 Gew.-%, bevorzugt 1 bis 99 Gew.-%, insbesondere 10 bis 99 Gew.-%, besonders bevorzugt 30 bis 99 Gew.-% Polyorganosiloxan-Komponente und 100 bis 0 Gew.-%, bevorzugt 99 bis 1 Gew.-%, insbesondere 90 bis 1 Gew.-%, besonders bevorzugt 70 bis 1 Gew.-% Polyalkyl(meth)acrylat-Kautschuk-Komponente (die Gesamtmenge der jeweiligen Kautschukkomponente ergibt 100 Gew.-%).

Als bevorzugte Silikonacrylatkautschuke kommen solche zum Einsatz, deren Herstellung in der JP 08 259 791-A, JP 07 316 409-A und EP-A 0 315 035 beschrieben werden. Die diesbezüglichen Inhalte dieser Anmeldungen werden hiermit in diese Anmeldung übernommen.

Die Polyorganosiloxan-Komponente im Silikonacrylat-Kompositkautschuk kann durch Umsetzung eines Organosiloxans und eines multifunktionalen Vernetzungsmittels in einem Emulsionspolymerisationsprozess hergestellt werden. Es ist weiterhin möglich, über Zusatz geeigneter ungesättigter Organosiloxane pfropfaktive Stellen in den Kautschuk einzufügen.

Das Organosiloxan ist im Allgemeinen cyclisch, wobei die Ringstrukturen bevorzugt 3 bis 6 Si-Atome enthalten. Beispielhaft seien genannt Hexamethylcyclotrisiloxan, Octamethylcyclotetrasiloxan, Decamethylcyclopentasiloxan, Dodecamethylcyclohexasiloxan, Trimethyltriphenylcyclotrisiloxan, Tetramethyltetraphenylcyclotetrasiloxan, Octaaphenylcyclotetrasiloxan, welche allein oder in Mischung von 2 oder mehr Verbindungen eingesetzt werden können. Die Organosiloxankomponente sollte am Aufbau des Silikonanteils im Silikonacrylatkautschuk zu mindestens 50 Gew.-%, bevorzugt mindestens 70 Gew.-% bezogen auf den Silikonanteil im Silikonacrylatkautschuk beteiligt sein.

Als Vernetzungsmittel werden im Allgemeinen 3- oder 4-funktionelle Silanverbindungen eingesetzt. Beispielhaft hierfür seien als besonders bevorzugt genannt: Trimethoxymethylsilan, Triethoxyphenylsilan, Tetramethoxysilan, Tetraethoxysilan, Tetra-n-propoxysilan, Tetrabutoxysilan. 4 funktionelle Verzweigungsmittel, insbesondere Tetraethoxysilan. Die Menge an Verzweigungsmittel beträgt im Allgemeinen 0 bis 30 Gew.-% (bezogen auf die Polyorganosiloxankomponente im Silikonacrylatkautschuk).

Zum Einbringen pfropfaktiver Stellen in die Polyorganosiloxankomponente des Silikonacrylatkautschuks kommen bevorzugt Verbindungen zum Einsatz, die eine der folgenden Strukturen bilden:

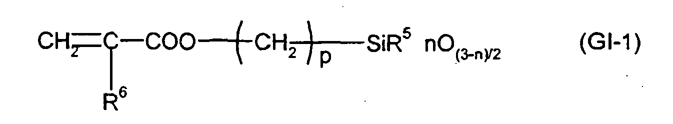

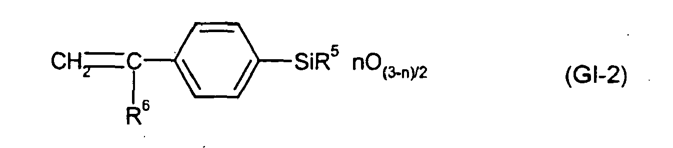

CH₂=CH-SiR⁵ nO_{(3,n)/2} (GI-3)

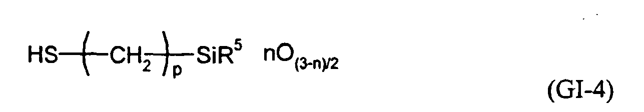

wobei
- R⁵: Methyl, Ethyl, Propyl oder Phenyl,
- R⁶: Wasserstoff oder Methyl,
- n: 0, 1 oder 2 und
- p: eine Zahl von 1 bis 6
bedeuten.

(Meth)acryloyloxysilan ist eine bevorzugte Verbindung zur Bildung der Struktur (GI 1). Bevorzugte (Meth)acryloyloxysilane sind beispielsweise β-Methacryloyloxyethyl-dimethoxy-methyl-silan, γ-Methacryloyl-oxy-propylmethoxy-dimethyl-silan, γ-Methacryloyloxypropyl-dimethoxy-methyl-silan, γ-Methacryloyloxypropyl-trimethoxy-silan, γ-Methacryloyloxy-propyl-ethoxy-diethyl-silan, γ-Methacryloyloxypropyldiethoxy-methyl-silan, γ-Methacryloyloxy-butyl-diethoxy-methyl-silan.

Vinylsiloxane, insbesondere Tetramethyl-tetravinyl-cyclotetrasiloxan sind fähig die Struktur GI-2 zu bilden.

Beispielsweise p-Vinylphenyl-dimethoxy-methylsilan kann Struktur GI-3 bilden. γ-Mercaptopropyldimethoxy-methylsilan, γ-Mercaptopropylmethoxy-dimethylsilan, γ-mercaptopropyldiethoxymethylsilan usw. können Struktur (GI-4) bilden.

Die Menge an diesen Verbindungen beträgt 0 bis 10, vorzugsweise 0,5 bis 5 Gew.-% (bezogen auf die Polyorganosiloxankomponente).

Die Acrylat-Komponente im Silikonakrylat-Kompositkautschuk kann aus Alkyl-(meth)acrylaten, Vernetzungsmitteln und pfropfaktiven Monomereinheiten hergestellt werden.

Als Alkyl(meth)acrylate seien beispielhaft und bevorzugt genannt Alkylacrylate wie Methylacrylat, Ethylacrylat, n-Propylacrylat, n-Butylacrylat, 2-Ethylhexylacrylat und Alkylmethacrylate wie Hexylmethacrylat, 2-Ethylhexylmethacrylat, n-Laurylmethacrylat und in besonders bevorzugter Weise n-Butylacrylat.

Als Vernetzungsmittel kommen multifunktionelle Verbindungen zum Einsatz. Es seien beispielhaft hierfür genannt: Ethylenglycoldimethacrylat, Propylenglycoldimethacrylat, 1,3-Butylenglycoldimethacrylat und 1,4-Butylenglykoldimethacrylat.

Zum Einfügen pfropfaktiver Stellen kommen beispielsweise folgende Verbindungen, allein oder in Mischung, zum Einsatz: Allylmethacrylat, Triallylcyanurat, Triallylisocyanurat, Allylmethacrylat. Allylmethacrylat kann auch als Vernetzungsmittel fungieren. Diese Verbindungen werden in Mengen von 0,1 bis 20 Gew.-%, bezogen auf die Acrylatkautschuk-Komponente im Silikonacrylat-Kompositkautschuk eingesetzt.

Methoden zur Herstellung der bevorzugt in den erfindungsgemäßen Zusammensetzungen eingesetzten Silikonacrylatkompositkautschuke sowie dessen Pfropfung mit Monomeren werden beispielsweise beschrieben in US-A 4 888 388, JP 08 259 791 A2, JP 07 316 409A und EP-A 0 315 035. Als Pfropfgrundlage für das Pfropfpolymer B kommen sowohl solche Silikonacrylat-Kompositkautschuke in Frage, deren Silikon- und Acrylatkomponenten eine Kern-Schale-Struktur bilden, als auch solche, die ein Netzwerk bilden, in denen Acrylat- und Silikonkomponente völlig miteinander durchdrungen sind ("interpenetrating network").

Die Pfropfpolymerisation auf die zuvor beschriebenen Pfropfgrundlagen kann in Suspension, Dispersion oder Emulsion durchgeführt werden. Bevorzugt ist die kontinuierliche oder diskontinuierliche Emulsionspolymerisation. Diese Pfropfpolymerisation wird mit Radikalinitiatoren durchgeführt (z.B. Peroxiden, Azoverbindungen, Hydroperoxiden, Persulfaten, Perphosphaten) und gegebenenfalls unter Einsatz von anionischen Emulgatoren, z.B. Carboxoniumsalzen, Sulfonsäuresalzen oder organischen Sulfaten. Dabei bilden sich Pfropfpolymerisate mit hohen Pfropfausbeuten, d.h. ein großer Anteil des Polymerisates der Pfropfmonomeren wird an den Kautschuk chemisch gebunden.

Für den Aufbau der Pfropfhülle der Pfropfpolymerisate B kommen vorzugsweise in Frage Gemische aus
50 bis 99 Gew.-% Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie Methylmethacrylat, Ethylmethacrylat) und
1 bis 50 Gew.-% Vinylcyanide (ungesättigte Nitrile wie Acrylnitril und Methacrylnitril) und/oder (Meth)Acrylsäure-(C₁-C₈)-Alkylester (wie Methylmethacrylat, n-Butylacrylat, tert.-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere sind Styrol, α-Methylstyrol, Methylmethacrylat, Acrylnitril und Maleinsäureanhydrid. Besonders bevorzugt kommen Gemische aus Styrol und Acrylnitril sowie Methylmethacrylat als Monomere für die Pfropfung in Frage.

Die Komponente B kann freies, d.h. nicht aufgepfropftes (Co)Polymer aus ggf. kernsubstituierten Vinylaromaten, (Meth)acrylsäure-(C₁-C₈)-Alkylestem, Vinylcyaniden und/oder Derivaten ungesättigter Carbonsäuren enthalten. Dieses entsteht entweder bei der Pfropfungsreaktion selbst oder wird in einem separaten Polymerisationsschritt hergestellt und mit dem Produkt aus der Pfropfpolymerisation gemischt, wobei diese Mischung sowohl in einem Präcompoundierungsschritt als auch bei der Compoundierung der Gesamtzusammensetzung erfolgen kann.

### Komponente C

Die erfindungsgemäßen Polymer-Zusammensetzungen können halogenfrei flammwidrig ausgerüstet werden. Dafür eignen sich insbesondere Flammschutzmittel auf Basis von Phosphor-, Silizium-, Stickstoff- und/oder Schwefelverbindungen.

Bevorzugt kommen Phosphor-Verbindungen als Flammschutzmittel zum Einsatz, insbesondere Phosphor- und Phosphonsäureester, Phosphazene, Phosphoramidate und Phosphonatamine.

Besonders bevorzugt kommen als FR-Additiv zum Einsatz solche oligomeren Phosphor- bzw. Phosphonsäureester der allgemeinen Formel (IV) 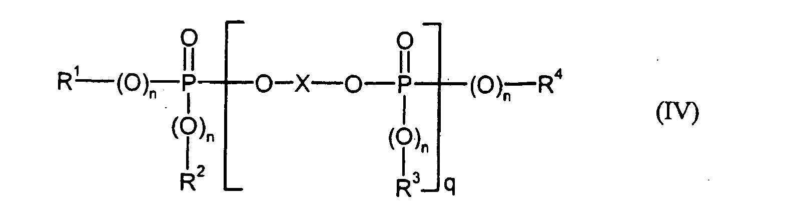 worin
- R¹, R², R³ und R⁴,: unabhängig voneinander jeweils C₁ bis C₈-Alkyl, jeweils gegebenenfalls durch Alkyl, vorzugsweise C₁ bis C₄-Alkyl, substituiertes C₅ bis C₆-Cycloalkyl, C₆ bis C₂₀-Aryl oder C₇ bis C₁₂-Aralkyl,
- n: unabhängig voneinander, 0 oder 1
- q: 0,5 bis 30 und
- X: einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R¹, R², R³ und R⁴ unabhängig voneinander für C₁ bis C₄-Alkyl, Phenyl, Naphthyl oder Phenyl-C₁-C₄-alkyl. Die aromatischen Gruppen R¹, R², R³ und R⁴ können ihrerseits mit Alkylgruppen, vorzugsweise C₁ bis C₄-Alkyl substituiert sein. Besonders bevorzugte Aryl-Reste sind Kresyl, Phenyl, Xylenyl, Propylphenyl oder Butylphenyl.
- X: in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.
- n: in der Formel (IV) kann, unabhängig voneinander, 0 oder 1 sein, vorzugsweise ist n gleich 1.
- q: steht für Werte von 0,5 bis 30, vorzugsweise 0,8 bis 15, besonders bevorzugt 1 bis 5, insbesondere 1 bis 2.
- X: steht besonders bevorzugt für 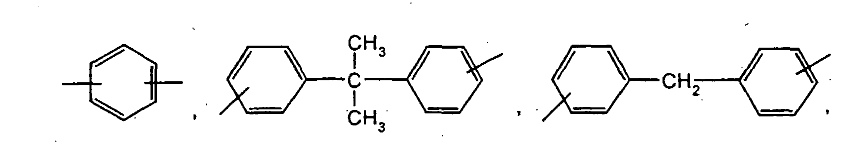 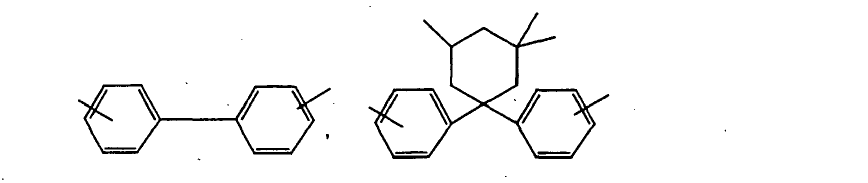 insbesondere leitet sich X von Resorcin, Hydrochinon, Bisphenol A oder Diphenylphenol ab. Besonders bevorzugt leitet sich X von Bisphenol A ab.

Weitere bevorzugte phosphorhaltige Verbindungen sind Verbindungen der Formel (IVa) 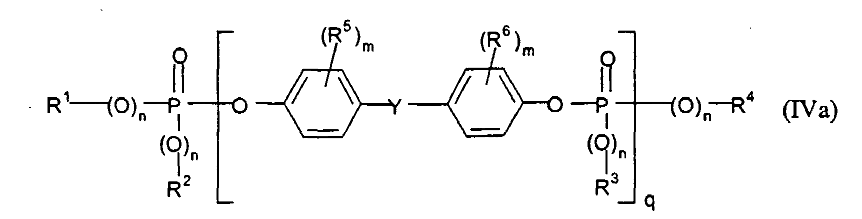 wobei
R¹, R², R³, R⁴, n und q die bei der Formel (IV) angegebene Bedeutung haben,
- m: unabhängig voneinander 0, 1, 2, 3 oder 4,
- R⁵ und R⁶: unabhängig voneinander C₁ bis C₄-Alkyl, vorzugsweise Methyl oder Ethyl und
- Y: C₁ bis C₇-Akyliden, C₁-C₇-Alkylen, C₅ bis C₁₂-Cycloalkylen, C₅ bis C₁₂-Cycloalkyliden, -O-, -S-, -SO₂ oder -CO-, vorzugsweise Isopropyliden oder Methylen, bedeuten.

Besonders bevorzugt ist 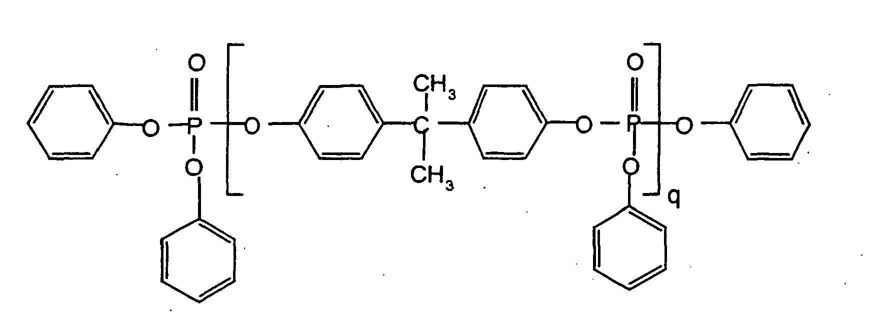 mit q = 1 bis 2.

Die Phosphorverbindungen gemäß Komponente C sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

Die Flammschutzmittel gemäß Komponente C kommen in der Regel in Einsatzmengen von bis zu 40 Gew.-%, vorzugsweise von bis zu 30 Gew.-%, insbesondere von bis zu 25 Gew.-% bezogen auf 100 Gew.-Teile A+B zum Einsatz.

### Komponente D

Die Flammschutzmittel entsprechend Komponente C werden oft in Kombination mit sogenannten Antidrippingmitteln verwendet, welche die Neigung des Materials zum brennenden Abtropfen im Brandfall verringern. Beispielhaft seien hier Verbindungen der Substanzklassen der fluorierten Polyolefine, der Silikone sowie Aramidfasern genannt. Diese können auch in den erfindungsgemäßen Zusammensetzungen zum Einsatz kommen. Bevorzugt werden fluorierte Polyolefine als Antidrippingmittel eingesetzt.

Fluorierte Polyolefine sind bekannt und beispielsweise in der EP-A 0 640 655 beschrieben. Sie werden zum Beispiel unter der Marke Teflon^{®} 30N von DuPont vertrieben.

Die fluorierten Polyolefine können sowohl in reiner Form als auch in Form einer koagulierten Mischung von Emulsionen der fluorierten Polyolefine mit Emulsionen der Pfropfpolymerisate gemäß Komponente B oder mit einer Emulsion eines (Co)Polymerisats auf Vinylmonomer-Basis, insbesondere auf Styrol/Acrylnitril oder Methylmethacrylat Basis, eingesetzt werden, wobei das fluorierte Polyolefin als Emulsion mit einer Emulsion des Pfropfpolymerisats oder des Copolymerisats gemischt und anschließend koaguliert wird.

Weiterhin können die fluorierten Polyolefine als Präcompound mit dem Pfropfpolymerisat Komponente B oder einem Copolymerisat, vorzugsweise auf Vinylmonomer-Basis, eingesetzt werden. Die fluorierten Polyolefine werden als Pulver mit einem Pulver oder Granulat des Pfropfpolymerisats oder Copolymerisats vermischt und in der Schmelze im allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, der durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril, Methylmethacrylat und deren Gemische. Das Polymerisat wird nach saurer Fällung und nachfolgender Trocknung als rieselfähiges Pulver eingesetzt.

Die Koagulate, Präcompounds oder Masterbatches besitzen üblicherweise Feststoffgehalte an fluoriertem Polyolefin von 5 bis 95 Gew.-%, vorzugsweise 7 bis 80 Gew.-%.

Die fluorierten Polyolefine kommen in der Regel in Konzentrationen von bis 2 Gew.-%, bevorzugt von bis zu 1 Gew.-%, insbesondere von bis zu 0,5 Gew.-%, bezogen auf 100 Gew.-Teile A+B, zum Einsatz, wobei sich diese Mengenangaben bei Einsatz eines Koagulats, Präcompounds oder Masterbatches auf das reine fluorierte Polyolefin beziehen.

### Komponente E (Weitere Zusätze)

Die erfindungsgemäßen Zusammensetzungen können weiterhin bis zu 50 Gew.-%, bevorzugt bis zu 30 Gew.-%, insbesondere bis zu 15 Gew.-%, bezogen auf 100 Gew.-Teile A+B, weitere Polymere und/oder übliche Polymeradditive enthalten.

Beispiele für weitere Polymere sind solche polymeren Verbindungen, die im Brandgeschehen durch Unterstützung der Ausbildung einer stabilen Kohleschicht, synergistische Wirkung zeigen können.

Bevorzugt sind dieses Polyphenylenoxide und -sulfide, Epoxid- und Phenolharze, Novolake und Polyether.

Als mögliche Polymeradditive können zum Einsatz kommen Hitzestabilisatoren, Hydrolysestabilisatoren, Lichtstabilisatoren, Fließ- und Verarbeitungshilfsmittel, Gleit- und Entformungsmittel, UV-Absorber, Antioxidantien, Antistatika, Konservierungsmittel, Haftverinitt, faser-, plättchen- oder teilchenförmige Füllstoffe und Verstärkungsstoffe ausgewählt aus der Gruppe bestehend aus. Glasfasern, Carbonfasern, Talkum, Wollastonit und nanoskalige anorganische Materialien Farbstoffe, Pigmente, Nukleierungsmittel, Verschäumungsmittel, weitere flammhemmende Zusätze und Mittel zur Verringerung der Rauchentwicklung sowie Mischungen aus den genannten Additiven.

Die erfindungsgemäßen Zusammensetzungen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen Zusammensetzungen können zur Herstellung von Formteilen jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Besonders bevorzugt eignen sich die erfindungsgemäßen Zusammensetzungen zur Extrusion, zum Blasformen und Tiefziehen.

Gegenstand der vorliegenden Erfindung sind daher auch ein Verfahren zur Herstellung der Zusammensetzung sowie deren Verwendung zur Herstellung von Formteilen sowie die Formteile selbst.

Beispiele für solche Formteile sind Folien, Profile, Gehäuseteile jeder Art, z.B. für Haushaltsgeräte wie Saftpressen, Kaffeemaschinen, Mixer; für Büromaschinen wie Monitore, Drucker, Kopierer; weiterhin Platten, Rohre, Elektroinstallationskanäle, Profile für den Bausektor, Innenausbau und Außenanwendungen; Teile aus dem Gebiet der Elektrotechnik wie Schalter und Stecker sowie Automobilinnen- und -außenteile.

Insbesondere können die erfindungsgemäßen Zusammensetzungen beispielsweise zur Herstellung von folgenden Formteilen verwendet werden:

Innenausbauteile für Schienenfahrzeuge, Schiffe, Flugzeuge, Busse und Automobile, Radkappen, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahrzeuge für Kinder, Flächige Wandelemente, Gehäuse für Sicherheitseinrichtungen, Heckspoiler, Karosserieteile für KFZ, Wärmeisolierte Transportbehältnisse, Vorrichtung zur Haltung oder Versorgung von Kleintieren, Formteile für Sanitär- und Badausrüstungen, Abdeckgitter für Lüfteröffnungen, Formteile für Garten- und Gerätehäuser, Gehäuse für Gartengeräte.

Die folgenden Beispiele dienen der weiteren Erläuterung der Erfindung.

### Beispiele

Die in der Tabelle 1 angegebenen und nachfolgend kurz erläuterten Komponenten werden auf einer ZSK-25 bei 260°C schmelzcompoundiert. Die Prüfkörper werden auf einer Spritzgießmaschine Typ Arburg 270 E bei 260°C hergestellt.

### Komponenten

### Komponente A1

Verzweigtes Polycarbonat auf Basis Bisphenol A mit einer relativen Lösungsviskosität von ηᵣₑₗ = 1,31, gemessen in CH₂Cl₂ als Lösungsmittel bei 25°C und einer Konzentration von 0,5 g/100 ml, welches durch Einsatz von 0,3 mol-% Isatinbiscresol bezogen auf die Summe aus Bisphenol A und Isatinbiscresol verzweigt wurde.

### Komponente A2

Lineares Polycarbonat aus Basis Bisphenol A mit einer relativen Lösungsviskosität von ηᵣₑₗ = 1,31, gemessen in CH₂Cl₂ als Lösungsmittel bei 25°C und einer Konzentration von 0,5 g/100 ml.

### Komponente A3

Verzweigtes Polycarbonat auf Basis Bisphenol A mit einer relativen Lösungsviskosität von ηᵣₑₗ = 1,28, gemessen in CH₂Cl₂ als Lösungsmittel bei 25°C und einer Konzentration von 0,5 g/100 ml, welches durch Einsatz von 0,3 mol-% Isatinbiscresol bezogen auf die Summe aus Bisphenol A und Isatinbiscresol verzweigt wurde.

### Komponente A4

Lineares Polycarbonat aus Basis Bisphenol A mit einer relativen Lösungsviskosität von ηᵣₑₗ = 1,28, gemessen in CH₂Cl₂ als Lösungsmittel bei 25°C und einer Konzentration von 0,5 g/100 ml.

### Komponente B1

Pfropfpolymerisat von 40 Gew.-Teilen eines Copolymerisats aus Styrol und Acrylnitril im Verhältnis 73:27 auf 60 Gew.-Teile vernetzten Polybutadienkautschuk, hergestellt durch Emulsionspolymerisation (mittlerer Teilchendurchmesser d₅₀ = 0,3 µm).

### Komponente B2

Blendex^{®} WX270: Mit Styrol und Acrylnitril gepfropfter EPDM-Kautschuk der Fa. UMG ABS Ltd., Tokyo, Japan.

### Komponente B3

Metablen^{®} S2001, Mit Methylmethacrylat gepfropfter Silikon-Butylacrylat-Kompositkautschuk der Fa. Mitsubishi Rayon Co. Ltd., Tokyo, Japan.

### Komponente B4

Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

### Komponente C

### Bisphenol-A basierendes Oligophosphat

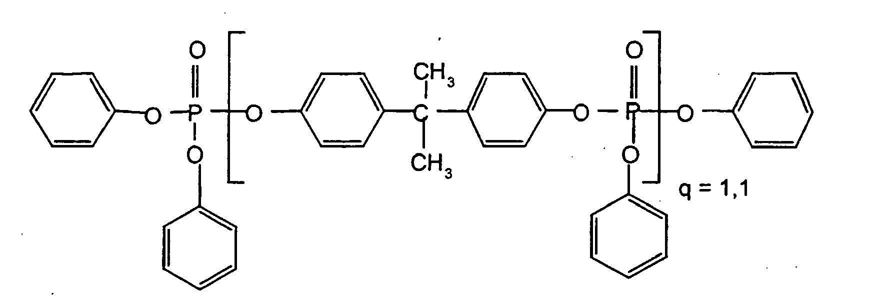

### Komponente D1

Tetrafluorethylenpolymerisat als koagulierte Mischung aus einer SAN-Pfropfpolymerisat-Emulsion gemäß oben genannter Komponente B1 in Wasser und einer Tetrafluorethylenpolymerisat-Emulsion in Wasser. Das Gewichtsverhältnis Pfropfpolymerisat B 1 zum Tetrafluorethylenpolymerisat in der Mischung ist 90 Gew.% zu 10 Gew.%. Die Tetrafluorethylenpolymerisat-Emulsion besitzt einen Feststoffgehalt von 60 Gew.%, der mittlere Teilchendurchmesser liegt zwischen 0,05 und 0,5 µm. Die SAN-Pfropfpolymerisat-Emulsion besitzt einen Feststoffgehalt von 34 Gew.% und einen mittleren Latexteilchendurchmesser von d₅₀ = 0,3 µm.

Die Emulsion des Tetrafluorethylenpolymerisats (Teflon^{®} 30 N) wird mit der Emulsion des SAN-Pfropfpolymerisats vermischt und mit 1,8 Gew.%, bezogen auf Polymerfeststoff, phenolischer Antioxidantien stabilisiert. Bei 85 bis 95°C wird die Mischung mit einer wässrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet.

### Komponente D2

Blendex^{®} 449: Teflon-Masterbatch aus 50 Gew.-% Styrol-Acrylnitril-Copolymerisat und 50 Gew.-% PTFE der Fa. GE Specialty Chemicals, Bergen op Zoom (Niederlande).

### Komponente E1/E2

### Pentaerythrittetrastearat als Gleit-/Entformungsmittel (E1)

### Phosphitstabilisator (E2)

Das Spannungsrissverhalten unter Chemikalieneinwirkung (ESC-Verhalten) wird an Stäben der Abmessung 80 mm x 10 mm x 4 mm gemäß ISO 4599 untersucht. Als Testmedium wird im Falle der flammwidrigen Zusammensetzungen eine Mischung aus 60 Vol.-% Toluol und 40 Vol.-% Isopropanol verwendet. Diese Mischung dient als Modell für ein aggressives Reinigungs-/Entfettungsmittel. Im Falle der nicht flammwidrigen Zusammensetzungen wird eine Mischung aus 50 Vol.-% Isooctan und 50 Vol.-% Toluol verwendet. Diese Mischung dient als Modell für einen Otto-Kraftstoff. Die Probekörper werden mittels einer Kreisbogenschablone vorgedehnt und die Zeit bis zum Bruchversagen in den jeweiligen Medien als Funktion der Vordehnung bestimmt. Beurteilt wird die minimale Vordehnung, bei der innerhalb von 5 min Bruchversagen eintritt.

Das Brandverhalten wurde nach UL-Subj. 94 V an Stäben der Abmessung 127 mm x 12,7 mm x 1,5 mm gemessen.

Eine Zusammenstellung der Eigenschaften der erfindungsgemäßen Zusammensetzung bzw. daraus erhaltener Prüfkörper ist in der Tabelle 1 und der Tabelle 2 wiedergegeben.

**Tabelle 1: Flammwidrige Formmassen und ihre Eigenschaften**

| | | V1* | 1 | 2 | V2* | V3* | V4* |
|---|---|---|---|---|---|---|---|
| **Komponenten [Gew.-Teile]** | | | | | | | |
| A1 | PC (verzweigt) | 84,8 | 84,7 | 84,7 | | | |
| A2 | PC (linear) | | | | 84,8 | 84,7 | 84,7 |
| B1 | ABS | 3,5 | | | 3,5 | | |
| B2 | AES | | 4,7 | | | 4,7 | |
| B3 | A(Si+A)S | | | 4,7 | | | 4,7 |
| C | BDP | 10,1 | 10,1 | 10,1 | 10,1 | 10,1 | 10,1 |
| D1 | PTFE-Masterbatch | 1,3 | - | - | 1,3 | - | - |
| D2 | PTFE- Masterbatch | - | 0,2 | 0,2 | - | 0,2 | 0,2 |
| E1 | PETS | 0,2 | 0,2 | 0,2 | 0,2 | 0,2 | 0,2 |
| E2 | Phosphitstabilisator | 0,1 | 0,1 | 0,1 | 0,1 | 0,1 | 0,1 |
| Pfropfmodifikator aus B und D | | 4,7 | 4,8 | 4,8 | 4,7 | 4,8 | 4,8 |
| PTFE aus D | | 0,1 | 0,1 | 0,1 | 0,1 | 0,1 | 0,1 |

| **Eigenschaften** | | | | | | | |
|---|---|---|---|---|---|---|---|
| ESC (Randfaserdehnung in %) | | 1,2 | 2,2 | 2,0 | 1,4 | 1,0 | 1,6 |
| UL94 V-Bewertung | | V-0 | V-0 | V-0 | V-0 | V-0 | V-0 |

| | | | | | | | |
|---|---|---|---|---|---|---|---|
| * Vergleichsversuch | | | | | | | |

**Tabelle 2: Nicht flammwidrige Formmassen und ihre Eigenschaften**

| | | 3 | 4 | V5 | V6 |
|---|---|---|---|---|---|
| **Komponenten [Gew.-Teile]** | | | | | |
| A3 | PC (verzweigt) | 56,5 | 56,5 | - | - |
| A4 | PC (linear) | - | - | 56,5 | 56,5 |
| B2 | AES | 24,8 | | 24,8 | - |
| B3 | A(Si+A)S | - | 24,8 | - | 24,8 |
| B4 | SAN | 17,8 | 17,8 | 17,8 | 17,8 |
| E1 | PETS | 0,7 | 0,7 | 0,7 | 0,7 |
| E2 | Phosphitstabilisator | 0,2 | 0,2 | 0,2 | 0,1 |

| **Eigenschaften** | | | | | |
|---|---|---|---|---|---|
| ESC (Randfaserdehnung in %) | | 2,4 | >2,4 | 2,0 | 2,4 |

Aus den Beispielen und Vergleichsbeispielen der Tabellen 1 und 2 geht hervor, dass - unabhängig davon, ob die Zusammensetzungen Flammschutzmittel enthalten - Polycarbonat-Zusammensetzungen mit Butadien-freien Pfropfpolymerisaten auf Basis von verzweigtem Polycarbonat besseres ESC-Verhalten aufweisen als äquivalente Zusammensetzungen mit linearem Polycarbonat gleicher Lösungsviskosität. Bei PC+ABS-Zusammensetzungen mit Polybutadienkautschuk-basierendem Pfropfpolymerisat wird ein entgegengesetztes Verhalten beobachtet, d.h. das ESC-Verhalten ist hier besser bei Verwendung von linearem Polycarbonat (vgl. V1 und V2).

## Patentansprüche

1. Zusammensetzungen bestehend aus
A) 40 bis 99,5 Gew.-Teile aromatisches Polycarbonat und/oder Polyestercarbonat und
B) 0,5 bis 60 Gew.-Teile Pfropfpolymerisat, mit einer von Polybutadienkautschuk verschiedenen Pfropfgrundlage,
C) gegebenenfalls als Flammschutzmittel mindestens eine Verbindung ausgewählt aus der Gruppe der Phosphor-, Silizium-, Stickstoff- und Schwefelverbindungen,
D) gegebenenfalls ein Antitropfmittel ausgewählt aus der Gruppe der fluorierten Polyolefine, der Silikone und Aramidfasern, und
E) gegebenenfalls mindestens eine Verbindung ausgewählt aus der Gruppe der Polyphenylenoxide und -sulfide, Epoxid- und Phenolharze, Novolake und Polyether, Hitzestabilisatoren, Hydrolysestabilisatoren, Lichtstabilisatoren, Fließ- und Verarbeitungshilfsmittel, Gleit- und Entformungsmittel, UV-Absorber, Antioxidantien, Antistatika, Konservierungsmittel, Haftvermittler, faser-, plättchen- oder teilchenförmige Füllstoffe und Verstärkungsstoffe ausgewählt aus der Gruppe bestehend aus Glasfasern, Carbonfasern, Talkum, Wollastonit und nanoskalige anorganische Materialien , Farbstoffe, Pigmente, Nukleierungsmittel, Verschäumungsmittel, weitere flammhemmende Zusätze und Mittel zur Verringerung der Rauchentwicklung,
**dadurch gekennzeichnet, dass** es sich bei dem Polycarbonat oder Polyestercarbonat um ein verzweigtes Polymer handelt, welches auf trifunktionellen oder tetrafunktionellen phenolischen Monomereinheiten als Verzweiger basiert, die als polymerisationsfähige funktionelle Gruppen auch Amin-Funktionalitäten enthalten, und welches in Bezug auf die Diol-Komponente aus 2,2-Bis-(4-hydroxyphenyl)-propan (Bisphenol-A) besteht.

2. Zusammensetzungen gemäß Anspruch 1, in denen B ein teilchenförmiges Pfropfpolymerisat ist, welches durch Emulsionspolymerisation hergestellt wurde.

3. Zusammensetzungen gemäß Anspruch 2, in denen B ein Pfropfpolymerisat mit einer Pfropfgrundlage ausgewählt aus der Gruppe der EPDM-Kautschuke, Silikonkautschuke, Acrylatkautschuke und Silikon-Acrylat-Kompositkautschuke ist.

4. Zusammensetzungen gemäß Anspruch 3, in denen B ein Pfropfpolymerisat mit einer Pfropfhülle aus
50 bis 99 Gew.-Teilen Vinylaromaten, kernsubstituierten Vinylaromaten und/oder (Meth)acrylsäure-(C₁-C₈)-Alkylestern und
1 bis 50 Gew.-Teilen Vinylcyaniden, (Meth)Acrylsäure-(C₁-C₈)-Alkylestern und/oder Derivaten ungesättigter Carbonsäuren
ist.

5. Zusammensetzungen gemäß Anspruch 1, in denen B freies (Co)Polymer aus gegebenenfalls kernsubstituierten Vinylaromaten, (Meth)acrylsäure-(C₁-C₈)-Alkylestem, Vinylcyaniden und/oder Derivaten ungesättigter Carbonsäuren enthält.

6. Zusammensetzungen gemäß Anspruch 1, in denen Komponente A ein aromatisches Polycarbonat bestehend aus 2,2-Bis-(4-hydroxyphenyl)propan (Bisphenol-A) als Diol-Komponente und Isatinbiscresol als Verzweiger ist.

7. Zusammensetzungen gemäß Anspruch 1, in denen der Verzweigergehalt in der Komponente A zwischen 0,01 und 5 mol-%, bezogen auf die Summe aus Diphenol und Verzweiger im aromatischen Polycarbonat und/oder Polyestercarbonat beträgt.

8. Zusammensetzungen gemäß Anspruch 1, in denen der Verzweigergehalt in der Komponente A zwischen 0,1 und 0,5 mol-%, bezogen auf die Summe aus Diphenol und Verzweiger im aromatischen Polycarbonat und/oder Polyestercarbonat beträgt.

9. Zusammensetzungen gemäß Anspruch 1 enthaltend mindestens ein halogenfreies, Phosphor-basierendes Flammschutzmittel ausgewählt aus der Gruppe der Phosphor- und Phosphonsäureester, Phosphazene, Phosphoramidate und Phosphonatamine.

10. Zusammensetzungen gemäß Anspruch 9 enthaltend mindestens ein Phosphor- oder Phosphonsäureester der allgemeinen Formel 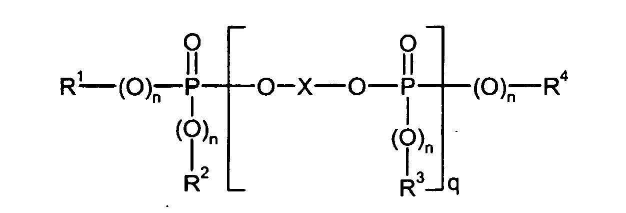 worin
R¹, R², R³ und R⁴ unabhängig voneinander jeweils C₁- bis C₈-Alkyl, jeweils gegebenenfalls durch Alkyl, substituiertes C₅- bis C₆-Cycloalkyl, C₆- bis C₂₀-Aryl oder C₇- bis C₁₂-Aralkyl,
n unabhängig voneinander 0 oder 1
q eine Zahl von 0,5 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

11. Zusammensetzungen gemäß Anspruch 10, in denen X ausgewählt ist aus der Gruppe

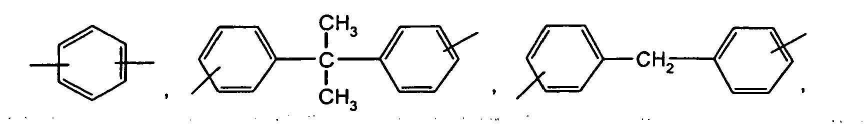

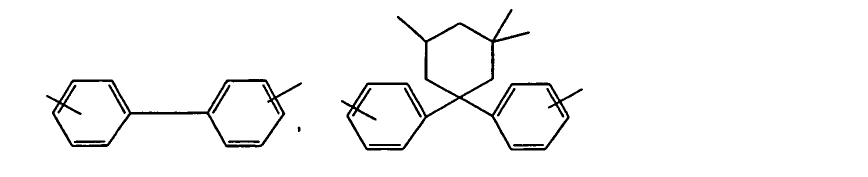

12. Zusammensetzungen gemäß Anspruch 11, in denen q einen Wert zwischen 1 und 2 annimmt.

13. Zusammensetzungen gemäß Anspruch 9, in denen das Flammschutzmittel in einer Menge von bis zu 25 Gew.-Teilen bezogen auf die Summe aus A) Polycarbonat und B) Pfropfpolymerisat zum Einsatz kommt.

14. Zusammensetzungen gemäß Anspruch 1, in denen das Antitropfmittel in einer Menge von bis zu 0,5 Gew.-Teilen bezogen auf die Summe aus A) Polycarbonat und B) Pfropfpolymerisat zum Einsatz kommt.

15. Verwendung der Zusammensetzungen gemäß Anspruch 1 zur Herstellung von Formteilen.

16. Formteile enthaltend Zusammensetzungen gemäß Anspruch 1.

## Claims

1. Compositions consisting of
A) 40 to 99.5 parts by weight of aromatic polycarbonate and/or polyester carbonate and
B) 0.5 to 60 parts by weight of graft polymer, having a grafting base different from polybutadiene rubber,
C) optionally as flameproofing agent at least one compound selected from the group comprising phosphorus, silicon, nitrogen and sulphur compounds,
D) optionally an anti-drip agent selected from the group comprising fluorinated polyolefins, silicones and aramide fibres, and
E) optionally at least one compound selected from the group comprising polyphenylene oxides and sulfides, epoxy and phenol resins, novolaks and polyethers, heat stabilisers, hydrolysis stabilisers, light stabilisers, antiblocking agents and processing agents, lubricating agents and mould release agents, UV absorbers, antioxidants, antistatics, preservatives, coupling agents, fibrous, platelet-type or particulate fillers and reinforcing agents selected from the group comprising glass fibres, carbon fibers, talcum, wollastonite and nanoscale inorganic materials, dyes, pigments, nucleating agents, foaming agents, further flame-retarding additives and means for reducing smoke formation,
**characterised in that** the polycarbonate or polyester carbonate is a branched polymer based on trifunctional or tetra functional phenolic monomer units as branching agent, which also contain amine functionalities as functional groups capable of polymerisation, and which with regard to the diol component consists of 2,2-bis-(4-hydroxyphenyl)-propane (bisphenol A).

2. Compositions according to claim 1, in which B is a graft polymer in particle form produced by emulsion polymerisation.

3. Compositions according to claim 2, in which B is a graft polymer with a grafting base selected from the group of EPDM rubbers, silicone rubbers, acrylate rubbers and silicone acrylate composite rubbers.

4. Compositions according to claim 3, in which B is a graft polymer with a grafting shell consisting of 50 to 99 parts by weight of vinyl aromatics, nuclear-substituted vinyl aromatics and/or (meth)acrylic acid-(C₁-C₆)-alkyl esters and 1 to 50 parts by weight of vinyl cyanides, (meth) acrylic acid -(C₁-C₆)-alkyl esters and/or derivatives of unsaturated carboxylic acids.

5. Compositions according to claim 1, in which B contains a free (co)polymer consisting of optionally nuclear-substituted vinyl aromatics, (meth)acrylic acid - (C₁-C₆)-alkyl esters, vinyl cyanides and/or derivatives of unsaturated carboxylic acids.

6. Compositions according to claim 1, in which component A is an aromatic polycarbonate consisting of 2,2-bis-(4-hydroxyphenyl) propane (bisphenol A) as diol component and isatin biscresol as branching agent.

7. Compositions according to claim 1, in which the content of branching agent in the component A is between 0.01 and 5 mole % referred to the sum of diphenol and branching agent in the aromatic polycarbonate and/or polyester carbonate.

8. Compositions according to claim 1, in which the content of branching agent in the component A is between 0.1 and 0.5 mole % referred to the sum of diphenol and branching agent in the aromatic polycarbonate and/or polyester carbonate.

9. Compositions according to claim 1, containing at least one halogen-free, phosphorus-based flameproofing agent selected from the group comprising phosphoric and phosphonic acid esters, phosphazenes, phosphoramidates and phosphonate amines.

10. Compositions according to claim 9, containing at least one phosphoric or phosphonic acid ester of the general formula 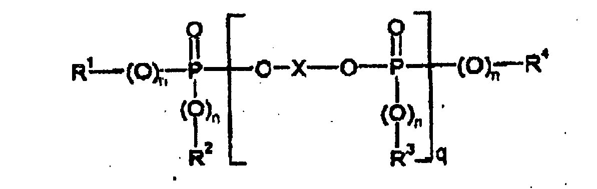 wherein
R¹, R², R³ and R⁴ independently of one another denote in each case C₁- to C₈-alkyl, or C₅-C₆-cycloalkyl, C₆-C₂₀-aryl or C₇-C₁₂-aralkyl, in each case optionally substituted by alkyl,
n independently of each other is 0 or 1
q is a number from 0.5 to 30 and
X denotes a mononuclear or polynuclear aromatic radical with 6 to 30 carbon atoms, or a linear or branched aliphatic radical with 2 to 30 carbon atoms, which can be substituted by OH and can contain up to eight ether bonds.

11. Compositions according to claim 10, in which X is selected from the group

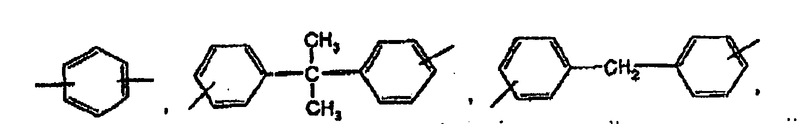

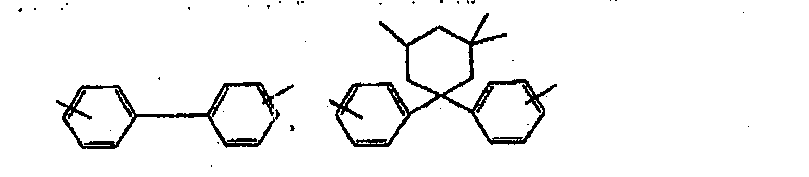

12. Compositions according to claim 11, in which q has a value between 1 and 2.

13. Compositions according to claim 9, in which the flameproofing agent is used in an amount of up to 25 parts by weight referred to the sum of A) polycarbonate and B) graft polymer.

14. Compositions according to claim 1, in which the anti-drip agent is used in an amount of up to 0.5 part by weight referred to the sum of A) polycarbonate and B) graft polymer.

15. Use of the compositions according to claim 1 for the production of moulded parts.

16. Moulded parts containing compositions according to claim 1.

## Revendications

1. Compositions consistant en :
A) 40 à 99,5 parties en poids d'un polycarbonate et/ou polyester-carbonate aromatique,
B) 0,5 à 60 parties en poids d'un polymère greffé dont le support de greffage ne consiste pas en un caoutchouc de polybutadiène,
C) le cas échéant, en tant qu'agent ignifugeant au moins un composé choisi dans le groupe des composés phosphorés, siliciés, azotés et sulfurés,
D) le cas échéant, un agent anti-gouttage choisi dans le groupe des polyoléfines fluorées, des silicones et des fibres d'Aramid, et
E) le cas échéant au moins un composé choisi dans le groupe des oxydes et sulfures de polyphénylène, des résines époxydiques et phénoliques, des novolaques et des polyéthers, des stabilisants contre la chaleur, des stabilisants contre l'hydrolyse, des stabilisants contre la lumière, des agents fluidifiants et produits auxiliaires de façonnage, des agents lubrifiants et agents de démoulage, des absorbeurs d'UV, des antioxydants, des agents antistatiques, des conservateurs, des agents d'adhérence, des matières de charge et matières renforçantes fibreuses, en écailles ou en particules choisies dans le groupe consistant en les fibres de verre, les fibres de carbone, le talc, la wollastomite et les matières minérales à l'échelle nanométrique, des colorants, des pigments, des agents de nucléation, des agents porogènes, d'autres additifs ignifugeants et des produits destinés à amoindrir les dégagements de fumée,
**caractérisées en ce que** le polycarbonate ou le polyestercarbonate est un polymère ramifié à base d'agents ramifiants consistant en motifs monomères phénoliques trifonctionnels ou tetrafonctionnels, qui contiennent encore en tant que groupes fonctionnels aptes à la polymérisation des fonctionnalités amines et qui, pour ce qui concerne le composant diol, consiste en le 2,2-bis-(4-hydroxyphényle)-propane (bisphénol-A).

2. Compositions selon la revendication 1, pour lesquelles B consiste en un polymère greffé à l'état de particules qui a été préparé par polymérisation en émulsion.

3. Compositions selon la revendication 2, pour lesquelles B est un polymère greffé dont le support de greffage est choisi dans le groupe des caoutchoucs EPDM, des caoutchoucs de silicones, des caoutchoucs d'acrylates et des caoutchoucs composites de silicone-acrylate.

4. Compositions selon la revendication 3, pour lesquelles B est un polymère greffé dont l'enveloppe de greffage consiste en
50 à 99 parties en poids de composés vinylaromatiques, de composés vinylaromatiques substitués dans les noyaux et/ou de (meth)acrylates d'alkyle en C₁-C₈ et
1 à 50 parties en poids de cyanures de vinyle, de (meth)acrylates d'alkyle en C₁-C₈ et/ou de dérivés d'acides carboxyliques insaturés.

5. Compositions selon la revendication 1, pour lesquelles B contient un (co)polymère libre de composés vinylaromatiques éventuellement substitués dans les noyaux, de (meth)acrylates d'alkyle en C₁-C₈, de cyanures de vinyle et/ou de dérivés d'acides carboxyliques insaturés.

6. Compositions selon la revendication 1, dans lesquelles le composant A est un polycarbonate aromatique consistant en le 2,2-bis-(4-hydroxyphényl)propane (bisphénol-A) en tant que composant diol, et l'isatine-biscrésol en tant qu'agent ramifiant.

7. Compositions selon la revendication 1, dans lesquelles la teneur en agent ramifiant du composant A va de 0,01 à 5 mol%, par rapport à la somme du diphénol et de l'agent ramifiant contenus dans le polycarbonate et/ou polyester-carbonate aromatique.

8. Compositions selon la revendication 1, dans lesquelles la teneur en agent ramifiant du composant A va de 0,1 à 0,5 mol% par rapport à la somme du diphénol et de l'agent ramifiant contenus dans le polycarbonate et/ou polyester-carbonate aromatique.

9. Compositions selon la revendication 1 contenant au moins un agent ignifugeant à base de phosphore et exempt d'halogènes, choisi dans le groupe des esters phosphoriques et phosphoniques, des phosphazènes, des phosphoramidates et des phosphonatamines.

10. Compositions selon la revendication 9 contenant au moins un ester phosphorique ou phosphonique de formule générale 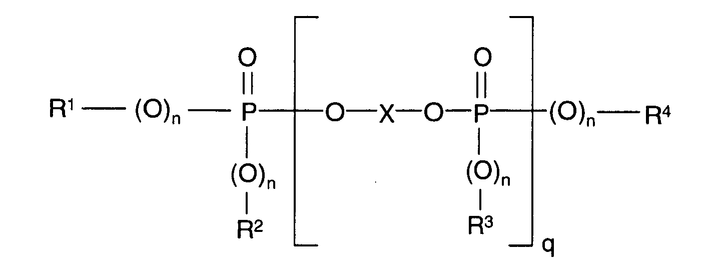 dans laquelle
R¹, R², R³ et R⁴ représentent chacun, indépendamment les uns des autres, un groupe alkyle en C₁-C₈, un groupe cycloalkyle en C₅-C₆, aryle en C₆-C₂₀ ou aralkyle en C₇-C₁₂, chacun d'eux éventuellement substitué par des groupes alkyles,
les indices n sont égaux chacun, indépendamment les uns des autres, à 0 ou 1,
q est un nombre allant de 0,5 à 30 et
X représente un radical aromatique mono- ou poly-cyclique en C₆-C₃₀ ou un radical aliphatique linéaire ou ramifié en C₂-C₃₀, qui peut être substitué par des groupes OH- et peut contenir jusqu'à 8 liaisons éther.

11. Compositions selon la revendication 10, dans lesquelles X est choisi dans le groupe suivant :

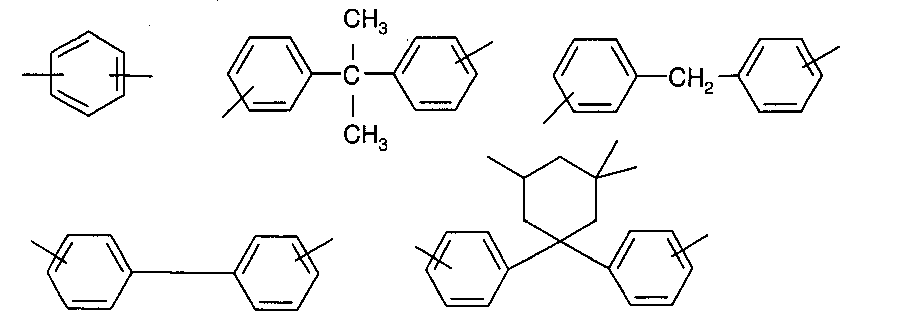

12. Compositions selon la revendication 11, pour lesquelles q a une valeur comprise entre 1 et 2.

13. Compositions selon la revendication 9, dans lesquelles l'agent ignifugeant est mise en oeuvre en quantité allant jusqu'à 25 parties en poids par rapport à la somme de A) le polycarbonate et B) le polymère greffé.

14. Compositions selon la revendication 1, dans lesquelles l'agent anti-gouttage est mis en oeuvre en quantité allant jusqu'à 0,5 parties en poids par rapport à la somme de A) le polycarbonate et B) le polymère greffé.

15. Utilisation des compositions selon la revendication 1 pour la fabrication de pièces moulées.

16. Pièces moulés contenant des compositions selon la revendication 1.
